# EUROPEAN PATENT APPLICATION

(11) **EP 3 793 047 A1**
(43) Date of publication of application: **17.03.2021**
(21) Application number: 19219471.0
(22) Date of filing: 23.12.2019
(51) Int. Cl.: H02G 3/04, H02G 9/04

(54) **A CABLE TROUGH**

(30) Priority: 21.12.2018 GB 201821039
(71) Applicant: Garrett, Timothy John Langford, Twickenham, TW2 5EH (GB)
(72) Inventor: Garrett, Timothy John Langford, Twickenham, TW2 5EH (GB)
(74) Representative: Bridge-Butler, Jeremy

(57) **Abstract**

A cable trough (30) comprising a cable channel (31) and a cover section (32) overlying said cable channel (31), in which said cover section (32) comprises an elongate opening (34) for receiving a cable therethrough, characterised in that said elongate opening (34) comprises a non-linear portion (39) comprising at least one formation extending through at least 90° and an intermediate part (50) normal to a longitudinal axis (49) of said cable channel (31).

## Description

The present invention relates to a cable trough, and particularly to a cable trough for a cable used in charging an electric vehicle (EV) or a hybrid electric vehicle (PHEV), and further reference to electric vehicles will be taken to mean reference to hybrid electric vehicles as well.

An electric vehicle requires regular charging and this involves connecting the electric vehicle to an external electricity supply. Users of electric vehicles living in properties who do not have off street parking are reliant on using public electric charge points to charge their vehicles. Such charge points may not be conveniently located or may be temporarily inaccessible when charging is required. If the user needs to charge their electric vehicle from their own property then the user would need to run a cable from their property across a public area. A problem with this is that a person might trip over the cable which may cause injury to the person and another problem is that the cable may be damaged. Furthermore, running a cable across a public area may contravene local council regulations.

It is an object of the present invention to provide a cable trough to alleviate at least one of the above-mentioned problems.

Therefore, according to a first aspect of the present invention there is provided a cable trough comprising a cable channel and a cover section overlying said cable channel, in which said cover section comprises an elongate opening for receiving a cable therethrough, characterised in that said elongate opening comprises a non-linear portion comprising at least one formation extending through at least 90° and an intermediate part substantially normal to a longitudinal axis of said cable channel.

By installing the cable trough in a public area so that the surface of the cable trough is substantially flush with the surface of the surrounding public area, a cable for charging an electric vehicle can be received in the cable channel where it can avoid damage and not form an obstacle. By the non-linear portion comprising at least one formation extending through at least 90° and an intermediate part normal to a longitudinal axis of the cable channel, a cable in the cable channel is retained therein at that location and prevented from being accidentally removed from the cable channel.

The non-linear portion can be any shape which has at least one formation extending through at least 90°, and an intermediate part substantially normal to the longitudinal axis of the underlying cable channel. The benefit of these shapes is that they result in a part of the cover section overlying the longitudinal axis of the cable channel, in order to prevent the cable readily escaping, and in a short and convenient axial length. In one version of the invention the non-linear portion can comprise a zigzag portion comprising an end part which initially bends away from the longitudinal axis of the cable channel, before bending back through more than 90°, so the non-linear portion then forms the intermediate part normal to the longitudinal axis. The zigzag portion can then comprise an opposite end part which bends back through the same greater than 90° angle, so the non-linear portion extends back towards the longitudinal axis, before bending back into line with it once it meets it again. With this shape there are two parts of the cover section which overlie the longitudinal axis of the cable channel, namely the parts on the insides of the greater than 90° bends. These parts are generally triangular in shape.

It will be appreciated that other shapes of non-linear portion are also possible. In one version the non-linear portion can comprise an end part which bends 90° from the longitudinal axis of the cable channel, so an intermediate part is then formed which is normal to the longitudinal axis, and which extends away from it. The non-linear portion can then bend through 90° in the opposite direction, so a middle part which is parallel to the longitudinal axis is formed. The non-linear portion can then comprise an opposite end part which bends through 90° so another intermediate part is formed which is normal to the longitudinal axis, and which extends towards it. The non-linear portion can then bend back through 90° when it meets the longitudinal axis once again. With this shape there is one part of the cover section which overlies the longitudinal axis of the cable channel, namely a square or rectangular part on the inside of the 90° bends defining the middle section.

The term "formation extending through at least 90°" includes within its scope any possible shape of elongate opening with a point thereof which is at least 90° to another point thereof. This can be simple curves or bends as described above, which are 90° or greater in their extent. However, it also includes formations made up of straight sections with angled corners between them which are less than 90°, like the sides of a 50 pence piece, but which formation as a whole comprises a point thereof which is at least 90° to another point thereof. It can also include formations which turn one way and then another, in either curved or stepped ways. However, preferably curved bends are used, as described in greater detail below as they are easiest to form.

Whatever the shape of non-linear portion, it can be located at any point along the length of the elongate opening as desired.

The remainder of the elongate opening other than the non-linear portion can be any shape, including a straight line in line with the longitudinal axis of the cable channel, or any straight, bent or curved shapes which deviate from the longitudinal axis of the underlying cable channel.

However, preferably the elongate opening may further comprise a substantially serpentine portion. This can comprise a sequence of two or more generally shallow bends which oscillate either side of the longitudinal axis of the underlying cable channel. This shape helps to retain a cable in the cable channel elsewhere than the non-linear portion, but in a way which is less aggressive. In particular, it is relatively easy for a user to guide the cable through the serpentine section to place it into the cable channel, and to remove it therefrom after use. By pulling the cable straight once it is in the cable channel it will not easily emerge from the serpentine section.

The cable trough may comprise a substantially non-electrically conductive material. Thus, the cable trough provides insulation from a damaged cable in the cable channel.

The cable channel may have a smooth internal profile. This prevents abrasion of a cable in the cable channel. A smooth transition or rounded profile may be provided between the elongate opening and an underside of the cover section above the cable channel. This prevents abrasion of a cable when it is removed from the cable channel.

The cable channel may have a first side, a second side and a base between the first side and second side, the base including an inclined portion adjacent at least the first side, the inclined portion inclined upwards towards the first side. The base may include an inclined portion adjacent both sides, each inclined portion inclined upwards towards said respective side.

The cable channel may comprise a drain for draining water therefrom.

The cable trough may comprise a first end face and a second end face.

The cable trough may comprise an alignment feature for engaging an adjacent cable trough with which it is used, in order to align the cable trough with the adjacent cable trough. When the cable trough is aligned with the adjacent cable channel block having a cable channel, the cable channels are aligned. The cable trough may comprise a first side face, a second side face, and first and second alignment features wherein the first alignment feature comprises a protrusion and the second alignment feature comprises an indentation for receiving a protrusion of an adjacent like cable trough with which the cable trough is used, the first end face having a said protrusion adjacent the first side face and a said indentation adjacent the second side face, and the second end face having a said protrusion adjacent the second side face and a said indentation adjacent the first side face.

The cable channel may extend between the first end face and the second end face, and comprise a first end opening at the first end face and a second end opening at the second end face, the elongate opening extending between the first end face and the second end face. Alternatively, the cable trough may comprise a first end face and a second end face and comprise a first end opening at the first end face and a second end closure at said second end face. The particular utility of these different constructions is explained in further detail below.

The non-linear portion may be adjacent a first end of the cover section. The elongate opening may additionally include a second non-linear portion of a similar shape for retaining a cable adjacent a second end of the cover section.

The elongate opening may have a first width, and the elongate opening may include a first portion at the first end of the cover section having a width which is greater than the first width. The elongate opening may include a second portion at the second end of the cover section having a width which is greater than the first width. The first portion and/or second portion of greater width enables any debris that falls into the cable channel to be cleared more easily. The first portion and/or the second portion may comprise a head of a T and the stem of the T corresponds to the first width.

The cable trough of the invention can be a single integrated unit. However, this may be harder to manufacture, and it may only find application where spaces of the same or a similar length need to be accommodated. Therefore, in preferred versions of the invention the cable trough can be formed from several modular parts.

Therefore, in one version of the invention the cable trough can comprise a first cable trough and an end cable trough, in which the first cable trough can comprise a first end face and a second end face, and the end cable trough can comprise a third end face to engage the first end face. The elongate opening can comprise an end elongate opening provided on the end cable trough and a first elongate opening provided on the first cable trough. The non-linear portion which comprises at least one formation extending through at least 90° and an intermediate part normal to a longitudinal axis of the cable channel can be provided on the end cable trough, and the serpentine portion can be provided on the first cable trough.

The end cable trough may be a first end cable trough and the cable trough can include a second such end cable trough configured such that it is at an opposite end of the cable trough to the first end cable trough. There may be any number of the first cable troughs between the first and second end cable troughs.

According to a second aspect of the present invention an end cable trough may be provided for use with or for creating a cable trough as previously described, the end cable trough comprising an end cable channel and an end cover section overlying the end cable channel, the end cover section comprising an end elongate opening for receiving a cable therethrough, characterised in that the end elongate opening has a non-linear portion comprising at least one formation extending through at least 90° and an intermediate part normal to a longitudinal axis of the end cable channel.

In versions of the invention in which a second end cable trough is used, it can comprise a third end face and a fourth end face, and the end cable channel can extend between the third end face and the fourth end face. A third end opening can be provided at the third end face, and a fourth end opening can be provided at the fourth end face. The end elongate opening can then extend from the third end face to the fourth end face. Such a construction can be used where the cable trough is sunken into a kerb, and it is more convenient to thread the cable out from the end of the cable trough than up through the top again.

Embodiments of the present invention will now be described, by way of example, with reference to the accompanying schematic drawings, in which:
Figures 1 and 2 are perspective views of a first cable trough part for use in a first embodiment of the first aspect of the present invention;
Figure 3 is a perspective view of an end cable trough for use in a first embodiment of the first aspect of the present invention;
Figure 4 is a perspective view of a first embodiment of a cable trough according to the first aspect of present invention;
Figure 5 is a perspective view of two of the cable troughs shown in Figure 4 placed end to end;
Figure 6 is a perspective view of a second embodiment of a cable trough according to the first aspect of the present invention;
Figure 7 is a perspective view of third embodiment of a cable trough according to the first aspect of the present invention;
Figure 8 is a perspective view of an end cable trough for use in a fourth embodiment of a cable trough according to the first aspect of the present invention;
Figures 9 and 10 are perspective views of an end cable trough part for use in a fifth embodiment of a cable trough according to the first aspect of the present invention; and,
Figure 11 is a perspective view of a fifth embodiment of a cable trough according to the first aspect of the present invention.

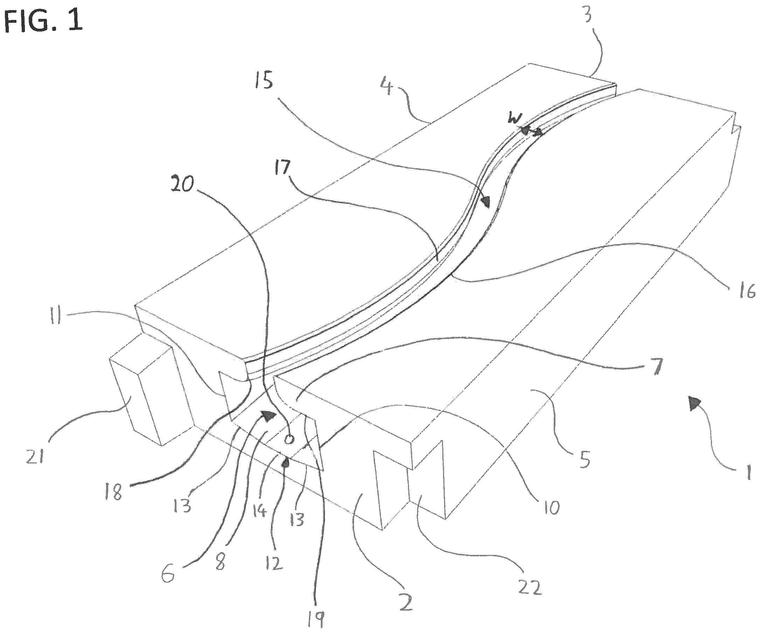

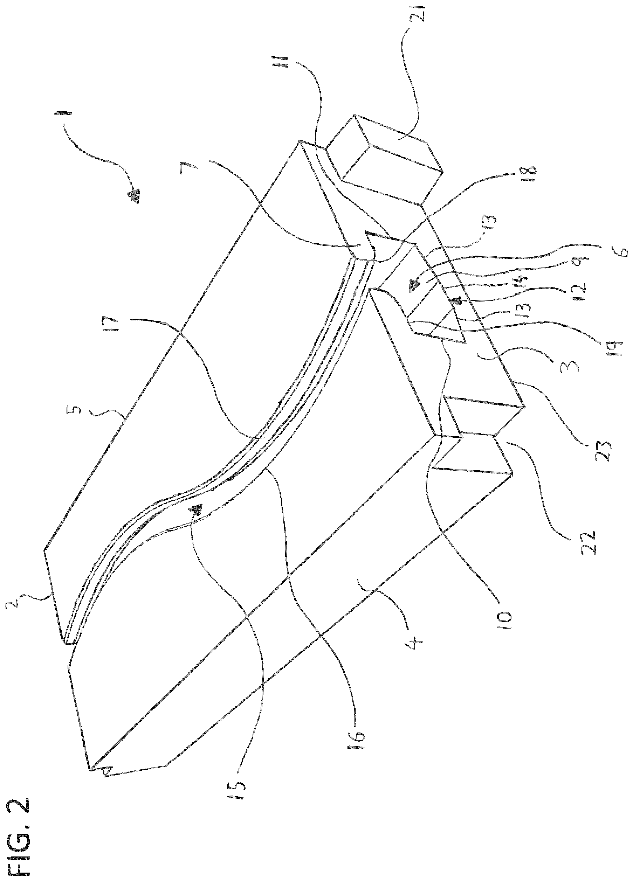

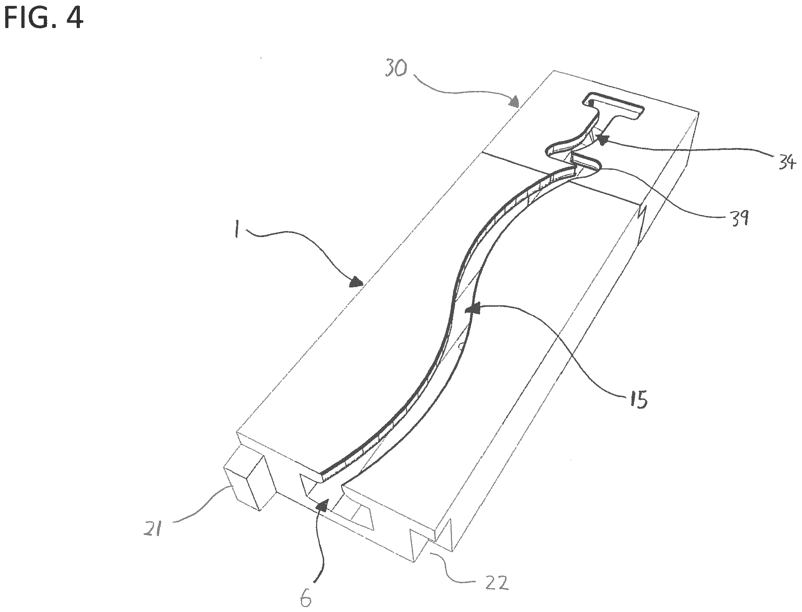

Referring to Figures 1 and 2 of the accompanying drawings, these show a first cable trough part 1, for forming a cable trough according to a first embodiment of the invention, which is shown in Figure 4. The cable trough part 1 has a first end face 2 and an opposite second end face 3, and a first side face 4 and an opposite second side face 5. The first cable trough 1 has a cable channel 6, and a cover section 7 overlying the cable channel 6.

The cable channel 6 extends between the first end face 2 and the second end face 3, and has a first end opening 8 at the first end face 2 and a second end opening 9 at the second end face 3. The cable channel 6 is located midway between the first and second side faces 4, 5, and the cable channel 6 is symmetrical about a vertical axial plane of the cable trough 1. The cable channel 6 has a first side 10, a second side 11 and a base 12 between the first side 10 and second side 11. The base 12 includes an inclined portion 13 adjacent each side 10, 11, and a base portion 14 between the inclined portions 13. Each inclined portion 13 is inclined upwards towards its respective side 10, 11.

The cover section 7 comprises an elongate opening 15 for receiving a cable therethrough, in which the elongate opening 15 extends from a first end of the cover section 7 to a second end of the cover section 7 wherein the first and second ends are the respective first and second end faces 2, 3 of the first cable trough 1. The ends of the elongate opening 15 at the respective end faces 2, 3 are located midway between the first and second side faces 4, 5. The elongate opening 15 comprises a serpentine portion 16 between the first end face 2 and the second end face 3. The elongate opening 15 extends between a pair of side surfaces 17 in the cover section 7. A rounded profile 18 is provided between each side surface 17 and an underside 19 of the cover section 7 above the cable channel 6. This provides a smooth transition between the elongate opening 15 and the cover section underside 19, and the cable channel 6 has a smooth internal profile.

Drainage apertures or drains 20 (only one shown in Figure 1) extend from the base portion 14 of the base 12 of the cable channel 6 to a base 23 of the first cable trough 1 to drain water from the cable channel 6.

The first end face 2 of the first cable trough 1 has a protrusion or lug 21 adjacent the first side face 4 and an indentation 22 adjacent the second side face 5. The indentation 22 is shaped to receive a lug of an adjacent cable trough part. The second end face 3 of the first cable trough 1 also has a lug 21 and an indentation 22 wherein the lug 21 is adjacent the second side face 5 and the indentation 22 is adjacent the first side face 4. The lugs 21 and indentations 22 are also adjacent the base 23 of the first cable trough 1.

The first cable trough 1 comprises robust and substantially non-electrically conductive material such as concrete, ceramic or brick. The first cable trough 1 is of sufficient strength to enable a vehicle to be driven across it without damaging the first cable trough 1. In a specific example of a preferred embodiment, the elongate opening 15 has a width in a range of 20 to 25 mm.

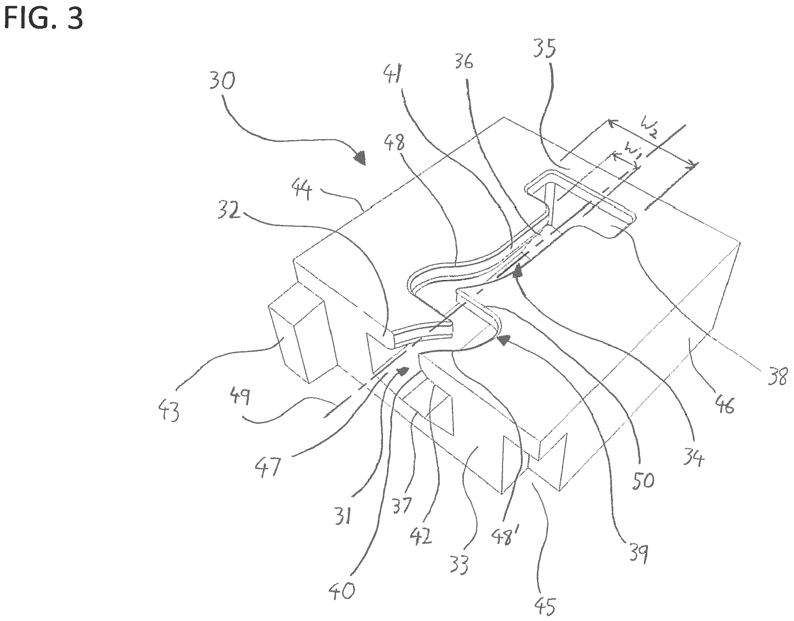

An end cable trough 30 for alignment with the first cable trough 1 is illustrated in Figure 3. The end cable trough 30 has an end cable channel 31 and an end cover section 32 overlying the end cable channel 31. The end cable trough 30 has a third end face 33 which is of the same size as the first and second end faces 2, 3 of the first cable trough 1, and the end cable channel 31 has the same profile as the cable channel 6 of the first cable trough 1. An end opening 47 is provided at the third end face 33. At its opposite end the end cable trough 30 has an end face which has an end closure. As such the end cable channel 31 is only open at the third end face 33.

The end cover section 32 comprises an end elongate opening 34 for receiving a cable therethrough. The end elongate opening 34 extends from a first end 35 of the end cover section 32 to the third end face 33. The underlying end cable channel 31 extends slightly beyond the end of the end elongate opening 34, so that a part of the end 35 of the end cover section 32 extends above the end of the end cable channel 31. An end 36 of the base 37 of the end cable channel 31 distal from the third end face 33 is inclined slightly upwards.

The end elongate opening 34 has a first width W₁ which is the same as the width W of the elongate opening 15 of the first cable trough 1 and includes a first end portion 38 at the end of the end cover section 32 having a width W₂ which is greater than the first width W₁. The first end portion 38 comprises a head of a T and the stem of the T comprises part of the end elongate opening 34 having the first width W₁.

Between the stem of the T and the third end face 33, the end elongate opening 34 has a zigzag portion 39 comprising an end part 48 which bends away from a longitudinal axis 49 of the end cable channel 31, and another end part 48' which bends back to the longitudinal axis 49, and an intermediate part 50 connecting the end parts 48, 48', wherein the bend between the intermediate part 50 and each end part 48, 48' of the zigzag portion 39 is more than 90°. As a result of this shape, and is clear from Figure 3, the intermediate part 50 is normal to the longitudinal axis 49 of the end cable channel 31. The bends between the intermediate part 50 and each end part 48, 48' of the zigzag portion 39 are tighter or are at a sharper angle than bends of the serpentine portion 16 of the first cable trough 1. The end elongate opening 34 has a rounded profile 40 between each side surface 41 of the end elongate opening 34 and an underside 42 of the end cover section 32.

The end cable channel 31 can have drainage apertures, like the drainage apertures 20 of the first cable trough 1, to drain water from the end cable channel 31.

The third end face 33 of the end cable trough 30 has a lug 43 adjacent a first side face 44 of the end cable trough 30 and an indentation 45 adjacent a second side face 46 of the end cable trough 30 wherein the lug 43 of the end cable trough 30 is shaped to be received in a said indentation 22 of the first cable trough 1, and the indentation 45 of the end cable trough 30 is shaped to receive a said lug 21 of the first cable trough 1. The end of the end elongate opening 34 at the end face 33 is located midway between the first and second side faces 44, 46.

The end cable trough 30 actually forms an embodiment of the present invention as such, because it comprises the essential features of claim 1 below. Namely, it comprises an elongate opening comprising a non-linear portion comprising at least one formation extending through at least 90° and an intermediate part substantially normal to a longitudinal axis of said cable channel. However, end cable trough 30 is not particularly practical in isolation as it is too short in length to span a pavement or other area over which a cable may need to be provided. Therefore, it is best utilised alongside first cable trough 1, as explained below.

To install, a trench is first provided across the land between a property and a parking area for an electric vehicle which may be a side of a road. Referring to Figure 4, the end cable trough 30 is placed in the trench (not shown) and first cable trough 1 is placed adjacent the end cable trough 30 so that the first end face 2 of the first cable trough 1 engages the third end face 33 of the end cable trough 30, wherein the lug 21 of the first end face 2 of the first cable trough 1 is received in the indentation 45 of the end cable trough 30 and the lug 43 of the end cable trough 30 is received in the indentation 22 of the first end face 2 of the first cable trough 1. This aligns the cable channel 6 in the first cable trough 1 with the end cable channel 31 in the end cable trough 30 and aligns the elongate opening 15 with the end of the zigzag portion 39 of the end elongate opening 34 at the third end face 33. Therefore, the first cable trough 1 and the end cable trough 30 combine to form a cable trough according to the first aspect of the present invention.

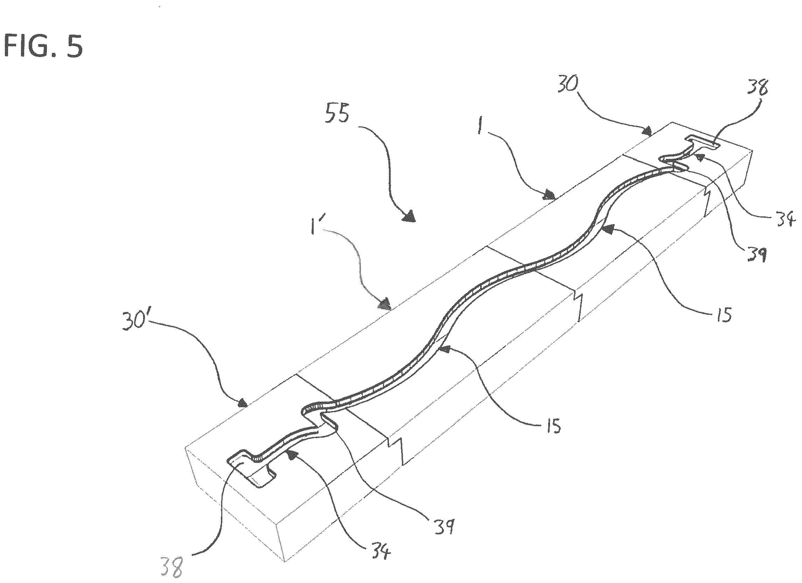

A second such first cable trough 1' is placed adjacent the first cable trough 1 so that the first end face 2 of the second first cable trough 1' engages the second end face 3 of the first cable trough 1, wherein the lug 21 of the first end face 2 of the second first cable trough 1' is received in the indentation 22 of the second end face 3 of the first cable trough 1 and the lug 21 of the second end face 3 of the first cable trough 1 is received in the indentation 22 of the first end face 2 of the second first cable trough 1'. This aligns the cable channels 6 and aligns the elongate openings 15. A second such end cable trough 30' is placed adjacent the second first cable trough 1' so that they engage in the same way as the end cable trough 30 and the first cable trough 1. Thus, a composite cable trough 55 made up of four parts is formed as shown in Figure 5, wherein the cable trough 55 substantially fills the trench. The trench should be of a specified depth so that the top of the cable trough 55 is flush with the top of the trench. Gaps between the cable trough 55 and the trench are then filled in.

A cable for charging an electric vehicle in the parking area is laid out from the property. Part of the cable is lowered into the end cable channel 31 of the end cable trough nearest the property (say the first end cable trough 30) via the first portion 38 of the end elongate opening 34 of the end cable trough 30. As the cable is lowered into end cable channel 31, the cable is fed along the end elongate opening 34 and around the zigzag portion 39 of the opening 34. The cable is then lowered into the cable channels 6 of the first cable troughs 1, 1' by the cable being fed along the elongate openings 15 of the first cable troughs 1, 1'. The cable is lowered into the end cable channel 31 of the second end cable trough 30' and is fed along the end elongate opening 34 including around the zigzag portion 39. The end of the cable extends out of the end cable channel 31 through the first portion 38 of the end elongate opening 34 of the second end cable trough 30'. The portion of the cable in the cable trough 55 is retained by the zigzag portions 39, wherein the zigzag portions 39 form cable retaining portions or cable stop portions. The end of the cable extending out from the second end cable trough 30' is pulled so that the cable portion in the cable trough arrangement is straightened and the serpentine elongate openings 15 of the first cable troughs 1, 1' prevent the cable from coming out of the cable channels 6. The cable can now be connected to the electric vehicle and since it is held in the cable trough 55 it does not form a hazard.

To remove the cable from the cable trough 55, the cable has to be specifically guided around the zigzag portions 39. Thus, the cable cannot be accidently removed from the cable trough 55.

Although the cable trough 55 illustrated in Figure 5 has two first cable troughs 1, 1' between the end cable troughs 30, 30', the number of first cable troughs between the end cable troughs 30, 30' is dependent on the length of the trench. Furthermore, modified cable troughs (not shown) which may be curved or angled may be provided for bends in the trench.

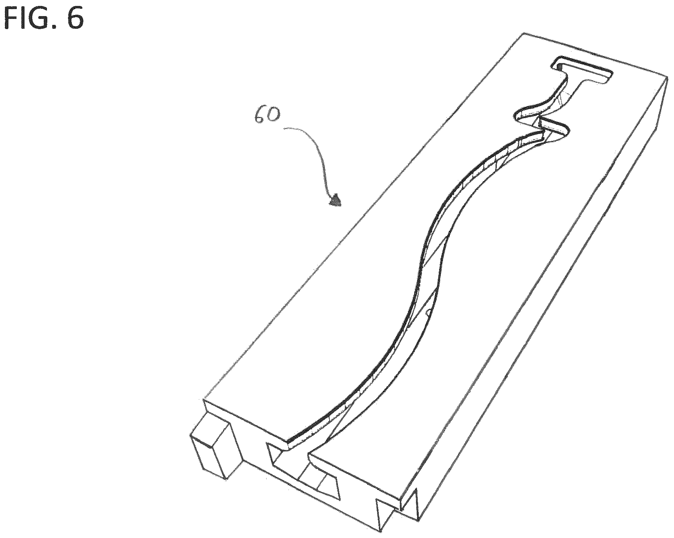

A second embodiment of a cable trough 60 is illustrated in Figure 6 which comprises an end cable trough shown in Figure 3 integrally formed with a first cable trough shown in Figures 1 and 2.

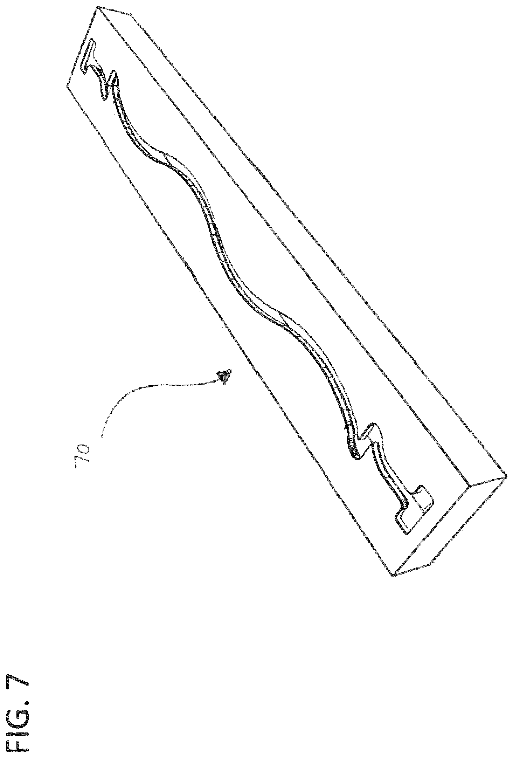

A third embodiment of a cable trough 70 is illustrated in Figure 7 which is the same as the cable trough 55 illustrated in Figure 5 except that all the cable troughs and end cable troughs together form a single integral cable trough 70.

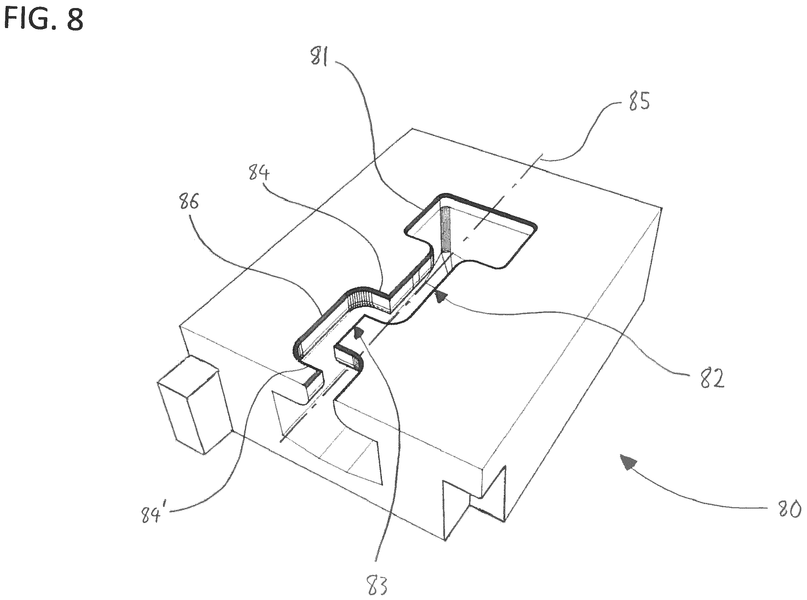

An end cable trough 80 for forming a fourth cable trough according to the present invention is illustrated in Figure 8. The first end portion 81 of the end elongate opening 82 is proportionally of a longer length than the first end portion 38 of the end elongate opening 34 of the end cable trough 30 illustrated in Figure 3. Also, the cable retaining portion 83 of the end elongate opening 82 comprises an end part 84 which bends substantially at a right angle away from the longitudinal axis 85 of the end cable channel, a middle part 86 parallel to the longitudinal axis 85, and another end part 84' which bends back to the longitudinal axis 85, wherein the bend between the middle part 86 and each end part 84, 84' of the cable retaining portion 83 is substantially 90°. Intermediate parts which are normal to the longitudinal axis 85 are therefore formed between the end parts 84 and 84' and the middle part 86.

The end cable trough 80 actually forms an embodiment of the present invention as such, because it comprises the essential features of claim 1 below. Namely, it comprises an elongate opening comprising a non-linear portion comprising at least one formation extending through at least 90° and an intermediate part substantially normal to a longitudinal axis of said cable channel. However, end cable trough 80 is not particularly practical in isolation as it is too short in length to span a pavement or other area over which a cable may need to be provided. Therefore, it is best utilised alongside one or more first cable troughs 1, in the manner described above.

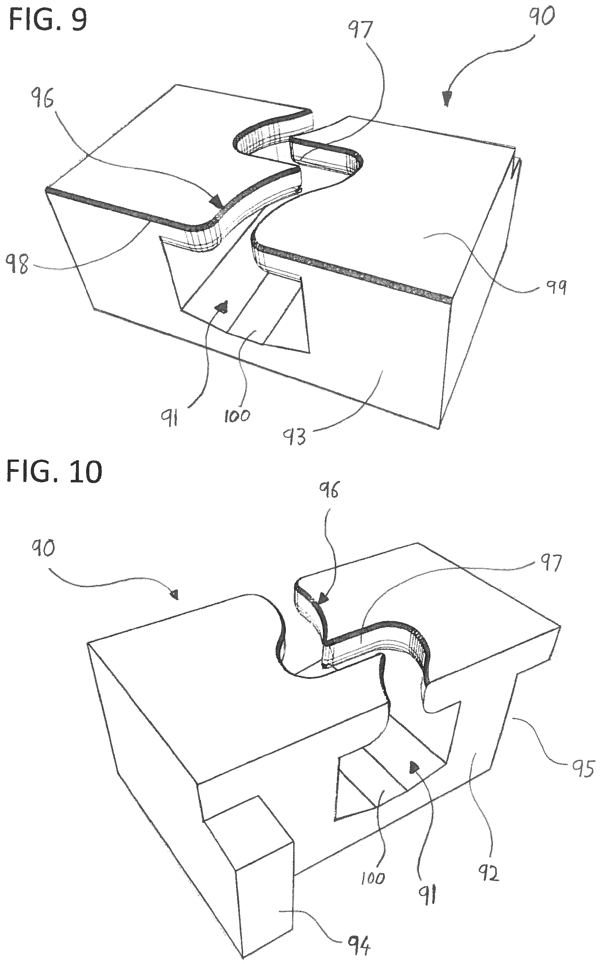

An end cable trough 90 for forming a fifth cable trough according to the present invention is illustrated in Figures 9 and 10. The cable channel 91 of this end cable trough 90 extends between each end opening 100 in the respective first and second (or third and fourth) end faces 92, 93 wherein the first end face 92 has the lug 94 and indentation 95 and the second end face 93 does not. The elongate opening 96 of the end cable trough 90 extends between the first and second end faces 92, 93 and has a zigzag portion 97 similar to the zigzag portion 39 illustrated in Figure 3. The modified end cable trough 90 could be used in a kerb and a rounded profile 98 is provided between the second end face 93 to be aligned with a side face of a kerb and a top face 99 of the end cable trough 90.

Once again, the end cable trough 90 actually forms an embodiment of the present invention as such, because it comprises the essential features of claim 1 below. Namely, it comprises an elongate opening comprising a non-linear portion comprising at least one formation extending through at least 90° and an intermediate part substantially normal to a longitudinal axis of said cable channel. However, end cable trough 90 is not particularly practical in isolation as it is too short in length to span a pavement or other area over which a cable may need to be provided. Therefore, it is best utilised alongside one or more first cable troughs 1, as described below.

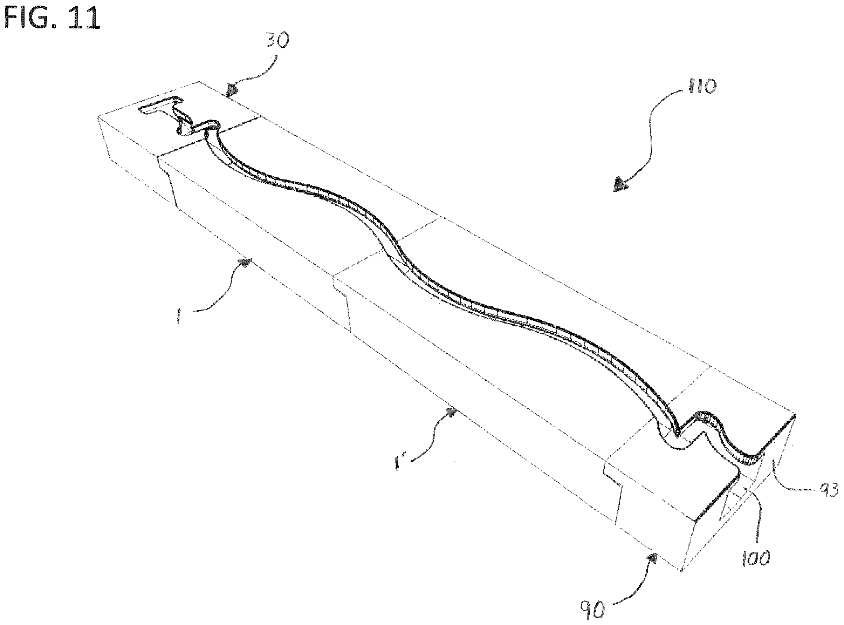

A fifth embodiment of a cable trough 110 is illustrated in Figure 11. It has two cable troughs 1, 1' between an end cable trough 30 as illustrated in Figure 3 and an end cable trough 90 as illustrated in Figures 9 and 10. A cable for charging an electric vehicle from a property is lowered into the end cable trough 30 and extends through the cable trough 110 where it emerges from the end opening 100 in the second end face 93 of the end cable trough 90 which may be aligned with a kerb.

A modified cable trough (not shown) may be provided which comprises an end cable trough shown in Figure 8 or an end cable trough shown in Figures 9 and 10 being integrally formed with a first cable trough as shown in Figures 1 and 2.

Another modified cable trough (not shown) may be provided which is the same as the cable trough 110 illustrated in Figure 11 except that all the cable troughs and end cable troughs together form a single integral cable trough.

Whilst particular embodiments have been described, it will be understood that various modifications may be made without departing from the scope of the claimed invention.

## Claims

1. A cable trough (30) comprising a cable channel (31) and a cover section (32) overlying said cable channel (31), in which said cover section (32) comprises an elongate opening (34) for receiving a cable therethrough, **characterised in that** said elongate opening (34) comprises a non-linear portion (39) comprising at least one formation extending through at least 90° (48) and an intermediate part (50) substantially normal to a longitudinal axis (49) of said cable channel (31).

2. The cable trough (30) as claimed in claim 1, wherein said non-linear portion (39) comprises a zigzag portion (39) comprising an end part (48) which initially bends away from said longitudinal axis (49) of the cable channel (31), before bending back through more than 90°, in which said zigzag portion (39) then comprises an opposite end part (48') which bends back through the same greater than 90° angle before bending back into line with said longitudinal axis (49).

3. The cable trough (1, 30) as claimed in claim 1, wherein said elongate opening (15, 34) further comprises a substantially serpentine portion (16).

4. The cable trough (1, 30) as claimed in claim 3, wherein said cable channel (6, 31) has a first side (10), a second side (11) and a base (12) between said first side (10) and second side (11), said base (12) including an inclined portion (13) adjacent to said first side (10) and an inclined portion (13) adjacent to said second side (11), each inclined portion (13) inclined upwards towards said respective side (10, 11).

5. The cable trough (1, 30) as claimed in claim 1, in which said cable channel (6, 31) comprises a drain (20) for draining water therefrom.

6. The cable trough (1, 30) as claimed in claim 1, wherein said cable trough (1, 30) comprises an alignment feature (21, 22) for engaging an adjacent cable trough (1', 30') with which it is used, in order to align said cable trough (1, 30) with said adjacent cable trough (1', 30').

7. The cable trough (90) as claimed in any one of claims 1 to 6, in which said cable trough (90) comprises a first end face (92) and a second end face (93), said cable channel (91) extending between said first end face (92) and said second end face (93), and comprising a first end opening (100) at said first end face (92) and a second end opening (100) at said second end face (93).

8. The cable trough (30) as claimed in any one of claims 1 to 6, in which said cable trough (30) comprises a first end face (33) and a second end face, said cable channel (31) extending between said first end face (33) and said second end face, and comprising a first end opening (47) at said first end face (33) and a second end closure at said second end face.

9. The cable trough (1, 30) as claimed in claim 1, wherein said non-linear portion (39) is adjacent to a first end (35) of said cover section (7, 32).

10. The cable trough (1, 30) as claimed in claim 9, wherein said elongate opening (15, 34) has a first width (W₁), and in which said elongate opening (15, 34) includes a first portion (38) at said first end (35) of said cover section (7, 32) having a width (W₂) which is greater than said first width (W₁).

11. The cable trough (1, 30, 1', 30') as claimed in claim 9, wherein said elongate opening (15, 34) comprises a second non-linear portion (39), said second non-linear portion (39) comprising at least one formation extending through at least 90° (48) and an intermediate part (50) normal to a longitudinal axis (49) of said cable channel (6, 31), and in which said second portion (39) is adjacent to a second end of said cover section (7, 32).

12. The cable trough (1, 30) as claimed in claim 2, in which said cable trough (1, 30) comprises a first cable trough (1) and an end cable trough (30), in which said first cable trough (1) comprises a first end face (2) and a second end face (3), in which said end cable trough (30) comprises a third end face (33) to engage said first end face (2), in which said elongate opening (15, 34) comprises an end elongate opening (34) provided on said end cable trough (30) and a first elongate opening (15) provided on said first cable trough (1), in which said non-linear portion (39) which comprises at least one formation extending through at least 90° (48) and an intermediate part (50) normal to a longitudinal axis (49) of said cable channel (6, 31) is provided on said end cable trough (30), and in which said serpentine portion (16) is provided on said first cable trough (1).

13. The cable trough (1, 30, 1', 30') as claimed in claim 12, in which said end cable trough (30) is a first end cable trough (30) and in which said cable trough (1, 30, 1', 30') comprises a second end cable trough configured such that it is at an opposite end of said cable trough (1, 30, 1', 30') to said first end cable trough (30).

14. An end cable trough (30) for use with or for creating a cable trough (1, 30) as claimed in claim 12 or 13, said end cable trough (30) comprising an end cable channel (31) and an end cover section (32) overlying said end cable channel (31), said end cover section (32) comprising an end elongate opening (34) for receiving a cable therethrough, **characterised in that** said end elongate opening (34) has a non-linear portion (39) comprising at least one formation extending through at least 90° and an intermediate part (50) normal to a longitudinal axis (49) of said end cable channel (31).

15. The cable trough (1, 30, 1', 90) as claimed in claim 13, in which said second end cable trough (90) comprises a third end face (92) and a fourth end face (93), in which said end cable channel (91) extends between said third end face (92) and said fourth end face (93), in which a third end opening (100) is provided at said third end face (92), and a fourth end opening (100) is provided at said fourth end face (93), and in which said end elongate opening (96) extends from said third end face (92) to said fourth end face (93).
